# EUROPÄISCHE PATENTSCHRIFT

(11) **EP 2 904 262 B1**
(45) Veröffentlichungstag und Bekanntmachung des Hinweises auf die Patenterteilung: **04.07.2018**
(21) Anmeldenummer: 13771389.7
(22) Anmeldetag: 26.09.2013
(51) Int. Cl.: F03D 1/06

(54) **FASERVERBUNDBAUTEIL FÜR DAS ROTORBLATT EINER WINDTURBINE**
COMPOSITE COMPONENT FOR A ROTOR BLADE
COMPOSANT COMPOSITE POUR LA PALE DE ROTOR D'UNE ÉOLIENNE

(30) Priorität: 01.10.2012 DE 102012217904
(43) Veröffentlichungstag der Anmeldung: 12.08.2015
(73) Patentinhaber: Senvion GmbH, 22297 Hamburg (DE)
(72) Erfinder: EYB, Enno, 24116 Kiel (DE); BENDEL, Urs, 24787 Fockbek (DE); MESTER, Hendrik, 24118 Kiel (DE)
(74) Vertreter: Wallinger Ricker Schlotter Tostmann
(86) Internationale Anmeldenummer: PCT/EP2013/002881
(87) Internationale Veröffentlichungsnummer: WO 2014/053225

(56) Entgegenhaltungen:
- EP-A1- 2 110 552
- EP-A1- 2 341 241
- EP-A1- 2 444 660
- JP-A- S61 192 866

## Beschreibung

Die Erfindung betrifft ein Faserverbundbauteil für ein Rotorblatt einer Windenergieanlage. Die Erfindung betrifft des Weiteren ein Rotorblatt für eine Windenergieanlage.

Bekannt sind Rotorblätter für Windenergieanlagen aus mehreren Einzelteilen, die in Faserverbundbauweise gefertigt und zu einem Rotorblatt verklebt werden. Die Einzelteile weisen zum Teil erhebliche Ausmaße auf und sind gewöhnlich flächig, d.h. die Dicke ist wesentlich kleiner als die Länge und die Breite.

Typische Rotorblätter bestehen aus wenigstens zwei Rotorblattschalen, die die äußere Form und somit die wesentlichen aerodynamischen Eigenschaften des Rotorblattes vorgeben. Beispielsweise ist eine Rotorblattschale für die Saugseite des Rotorblatts, die sogenannte Oberschale, und eine Rotorblattschale für die Druckseite des Rotorblatts, die sogenannte Unterschale, vorgesehen.

Die Rotorblattschalen sind üblicherweise im Bereich der größten Profildicke des Rotorblattes durch sogenannte Gurte verstärkt und im Bereich der Gurte durch Hauptstege miteinander verbunden. Die Gurte und die Hauptstege bilden dabei die wesentliche tragende Struktur des Rotorblattes, während die Rotorblattschalen ansonsten relativ leicht und dünn als Sandwichlaminate ausgebildet sind. Dabei werden beispielsweise auf einen leichten Sandwichkern aus beispielsweise Balsaholz beidseitig Schichten aus faserverstärkten Verbundwerkstoffen auflaminiert.

Bekannte Rotorblätter haben oft, insbesondere im Übergangsbereich zur Blattwurzel, Abschnitte, in denen das aerodynamische Profil eine Profilendfläche, die auch als abgeschnittene Hinterkante bezeichnet wird, aufweist. Das Profil weist in diesen Abschnitten somit keine spitz auslaufende Hinterkante auf, sondern endet mit einer quer zur Profilsehne angeordneten Abschlussfläche, die insbesondere unter Ausbildung von scharfen Kanten, in die Rotorblattschalen an der Saugseite und der Druckseite des Profils übergeht. Die Übergangskanten verlaufen im Wesentlichen in Längsrichtung des Rotorblattes und sind im Betrieb erheblichen Belastungen ausgesetzt.

Wenn die Kanten als durchgängiges, an der Kante abknickendes Sandwichlaminat ausgeführt sind, ist der Bauteilwiderstand gegen Biegebelastungen nur gering. Bei höheren Belastungen drohen außerdem Delaminationen im Sandwichlaminat, die zum plötzlichen Bauteilversagen führen können.

Im Stand der Technik werden daher in der Regel die Rotorblattschalen für die Saug- und Druckseite sowie die Abschlussfläche als separate Bauteile in Sandwichlaminatbauweise gefertigt. Die einzelnen Bauteile werden anschließend unter Ausbildung der Übergangskanten miteinander verklebt und die Klebestellen bzw. die Übergangskanten zur Erhöhung der Stabilität nochmals überlaminiert. Dieses Fertigungsverfahren ist gekennzeichnet durch eine lange Zykluszeit, weil die einzelnen Verfahrensschritte nicht parallelisiert werden können. Außerdem bedarf es aufwendiger Vorrichtungen zum Einsetzen und Ausrichten der Abschlussfläche zwischen den Rotorblattschalen.

EP 2 444 660 A1 offenbart ein Rotorblatt einer Windenergieanlage und ein Verfahren zur Herstellung desselben.

EP 2 110 552 A1 offenbart auch ein Rotorblatt einer Windenergieanlage mit einem integrierten Blitzschlagableiter und ein Verfahren zur Herstellung desselben.

Ausgehend von diesem Stand der Technik besteht die Aufgabe der vorliegenden Erfindung darin, die mechanische Belastbarkeit von Rotorblättern zu erhöhen und die Fertigung zu vereinfachen und zu beschleunigen.

Diese Aufgabe wird gelöst durch ein Faserverbundbauteil für ein Rotorblatt einer Windenergieanlage umfassend einen ersten Sandwichkern und einen neben dem ersten Sandwichkern angeordneten zweiten Sandwichkern, wobei die Sandwichkerne jeweils eine dem Rotorblattinneren zugewandte Innenseite und eine dem Rotorblattäußeren zugewandte Außenseite aufweisen, wobei das Faserverbundbauteil ferner eine erste faserhaltige Laminatschicht umfasst, die beim ersten Sandwichkern an der Innenseite des ersten Sandwichkerns und beim zweiten Sandwichkern an der Außenseite des zweiten Sandwichkerns angeordnet ist, eine zweite faserhaltige Laminatschicht, die beim ersten Sandwichkern an der Außenseite des ersten Sandwichkerns und beim zweiten Sandwichkern an der Außenseite des zweiten Sandwichkerns angeordnet ist, sowie eine dritte faserhaltige Laminatschicht, die beim ersten Sandwichkern an der Innenseite des ersten Sandwichkerns und beim zweiten Sandwichkern an der Innenseite des zweiten Sandwichkerns angeordnet ist, wobei der erste Sandwichkern und der zweite Sandwichkern, insbesondere bereichsweise, unter einem Winkel zueinander angeordnet sind, wobei der Winkel in einem Bereich zwischen 10° und 170° liegt.

Die faserhaltigen Laminatschichten tragen maßgeblich zu der Stabilität des Faserverbundbauteils bei. Faserhaltige Laminatschichten im Rahmen der Erfindung sind insbesondere Schichten aus faserverstärktem Verbundwerkstoff oder Faserverbundwerkstoff. Bekannte Faserverbundwerkstoffe, beispielsweise glasfaserverstärkte Kunststoffe (GFK) oder kohlefaserverstärkte Kunststoffe (CFK), zeichnen sich durch hohe strukturelle Stabilität und geringes Gewicht aus. Außerdem können Faserverbundwerkstoffe vorteilhafterweise nahezu beliebig geformt werden.

Ein Sandwichkern im Rahmen der Erfindung ist insbesondere eine Schicht des Sandwichlaminats aus einem leichten Material, wie beispielsweise Kunststoff, Schaumstoff oder Balsaholz. Die Sandwichkerne des erfindungsgemäßen Faserverbundbauteils haben insbesondere die Funktion, die Laminatschichten des Faserverbundbauteils in einem vorgegebenen Abstand zueinander zu halten. Dadurch wird insbesondere die Flächenstabilität des Faserverbundbauteils weiter erhöht.

Ein Vorteil der Erfindung besteht darin, dass die erste Laminatschicht, die erfindungsgemäß beim ersten Sandwichkern an der Innenseite und beim zweiten Sandwichkern an der Außenseite angeordnet ist, den Verbindungsbereich zwischen den beiden Sandwichkernen stabilisiert. Hierfür verläuft die erste Laminatschicht insbesondere ununterbrochen von der Innenseite des ersten Sandwichkerns zwischen den beiden Sandwichkernen hindurch zur Außenseite des zweiten Sandwichkerns. Die erfindungsgemäße erste Laminatschicht erfüllt dabei insbesondere eine Klammerfunktion zwischen den beiden Sandwichkernen. Dadurch gewährleistet die Erfindung auch dann eine ausreichende Stabilität des Sandwichlaminats, wenn das Faserverbundbauteil an der Verbindung von dem ersten Sandwichkern und dem zweiten Sandwichkern eine Kante aufweist.

Ein weiterer Vorteil der Erfindung besteht darin, dass das entsprechende Bauteil in einem Arbeitsgang gefertigt werden kann und die Verbindungsstelle zwischen den beiden Sandwichkernen nicht nachträglich verstärkt werden muss.

Die Innenseite eines Sandwichkerns bezeichnet im Rahmen der Erfindung insbesondere eine Seite oder Seitenfläche des Sandwichkerns, die bei bestimmungsgemäßem Einsatz des erfindungsgemäßen Faserverbundbauteils in einem Rotorblatt einer Windenergieanlage dem Inneren des Rotorblattes zugewandt ist. Entsprechend bezeichnet die Außenseite eines Sandwichkerns insbesondere die der Innenseite abgewandte Seite des Sandwichkerns.

Die erste Laminatschicht, die zweite Laminatschicht und/oder die dritte Laminatschicht umfassen vorzugsweise jeweils wenigstens eine Lage Fasermaterial, das in einer Matrix aus ausgehärtetem Matrixmaterial eingebettet ist.

Die lagenweise Anordnung des Fasermaterials der Laminatschichten hat insbesondere fertigungstechnische Vorteile. Beispielsweise ist die Ausrichtung der Fasern, die maßgeblich die Stabilität des Faserverbundbauteils bestimmt, bei lagenweiser Anordnung der Fasern leichter vorzugeben und zu kontrollieren. Auch ermöglicht die lagenweise Anordnung der Fasern, abhängig vom konkreten Faserverbundbauteil besonders belastete Bereiche oder Abschnitte der Laminatschichten durch zusätzliche Fasern oder Fasermateriallagen zu verstärken.

Unter Matrixmaterial werden im Rahmen der Erfindung insbesondere ursprünglich fließfähige Natur- oder Kunstharze verstanden, die insbesondere unter Luft-, Wärme- und/oder Lichteinwirkung, inklusive Einwirkung von UV-Licht, aushärten. Fasermaterial bezeichnet insbesondere Glasfaserhalbzeug, Kohlefaserhalbzeug oder Kunststofffaserhalbzeug in Form von Fasermatten, Gewebe, Gelege, Vlies oder Endlosfasern. Die Fertigung des erfindungsgemäßen Faserverbundbauteils kann sowohl unter Verwendung von harzgetränktem Fasermaterial, so genannten Prepregs, als auch unter Verwendung von trockenem Fasermaterial, das, beispielsweise in einem Vakuuminfusionsverfahren, mit Harz getränkt wird, erfolgen.

Die mechanische Stabilität des erfindungsgemäßen Faserverbundbauteils wird vorteilhafterweise weiter erhöht, wenn die erste Laminatschicht, die zweite Laminatschicht und die dritte Laminatschicht eine gemeinsame Matrix aus ausgehärtetem Matrixmaterial aufweisen. Insbesondere sind vorteilhafterweise das Fasermaterial bzw. die Fasern des Fasermaterials der drei Laminatschichten in einer einzigen Matrix aus ausgehärtetem Matrixmaterial eingebettet. Auf diese Weise wird insbesondere ein Delaminieren bzw. Ablösen einzelner Laminatschichten innerhalb des Sandwichlaminats wirksam verhindert.

Erfindungsgemäß sind der erste Sandwichkern und der zweite Sandwichkern, insbesondere bereichsweise, unter einem Winkel zueinander angeordnet bzw. winkelig zueinander angeordnet. Hierdurch wird insbesondere erreicht, dass sich das Sandwichlaminat im Bereich des ersten Sandwichkerns und das Sandwichlaminat im Bereich des zweiten Sandwichkerns gegenseitig stabilisieren. Der Winkel liegt erfindungsgemäß in einem Bereich zwischen 10° und 170°, insbesondere zwischen 25° und 165°.

Als bevorzugte Anwendung der Erfindung ist oder umfasst das erfindungsgemäße Faserverbundbauteil eine Rotorblattschale oder eine Rotorblattteilschale.

Bei einer darüber hinaus bevorzugten Ausführungsform der Erfindung ist oder umfasst das Faserverbundbauteil eine Rotorblattschale oder eine Rotorblattteilschale und/oder einen Abschlusssteg für eine Profilendfläche des Rotorblattes oder einen Bereich des Rotorblattes, in dem ein aerodynamisches Profil des Rotorblattes eine abgeschnittene Hinterkante aufweist.

Dies ist beispielsweise im nabennahen Bereich, d.h. im Übergangsbereich hin zur Rotorblattwurzel, üblicherweise der Fall.

Die der Erfindung zugrunde liegende Aufgabe wird auch gelöst durch ein Rotorblatt für eine Windenergieanlage mit einem erfindungsgemäßen Faserverbundbauteil.

Vorzugsweise umfasst das erfindungsgemäße Rotorblatt einen, insbesondere nabennahen, Bereich, in dem ein aerodynamisches Profil des Rotorblattes eine Profilendfläche, insbesondere eine abgeschnittene Hinterkante, aufweist.

Des Weiteren ist vorzugsweise vorgesehen, dass das erfindungsgemäße Faserverbundbauteil in dem Bereich des Rotorblattes, in dem ein aerodynamisches Profil des Rotorblattes eine Profilendfläche, insbesondere eine abgeschnittene Hinterkante, aufweist, angeordnet ist.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch einen nabennahen Bereich eines erfindungsgemäßen Rotorblattes;
- Fig. 2: schematisch eine Schnittdarstellung des erfindungsgemäßen Rotorblattes entlang der Linie A-A in Fig. 1;
- Fig. 3: schematisch eine Schnittdarstellung des Sandwichlaminats des erfindungsgemäßen Rotorblattes entlang der Linie B-B in Fig. 1 und
- Fig. 4: schematisch eine Schnittdarstellung des Sandwichlaminats des erfindungsgemäßen Rotorblattes entlang der Linie C-C in Fig. 1.

In den Zeichnungen sind jeweils gleiche oder gleichartige Elemente und/oder Teile mit denselben Bezugsziffern versehen, so dass von einer erneuten Vorstellung jeweils abgesehen wird.

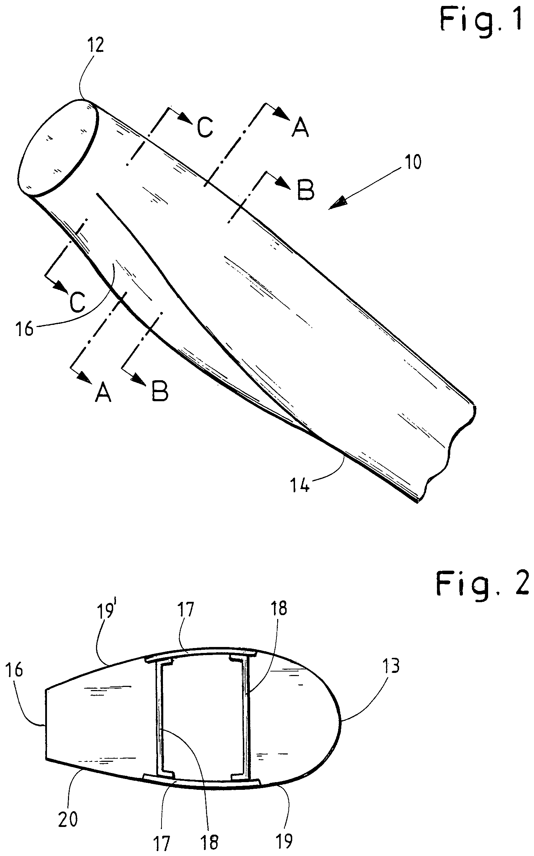

Fig. 1 zeigt schematisch den nabennahen Bereich eines erfindungsgemäßen Rotorblattes 1.

Das Rotorblatt verfügt über eine im Querschnitt runde Blattwurzel 12 zur Verbindung des Rotorblattes 10 mit einer Nabe einer Windenergieanlage. Entlang der Längserstreckung des Rotorblattes 10 hinter der Blattwurzel 12 weist das Rotorblatt 10 im Querschnitt ein mit Abstand zur Blattwurzel 12 variierendes aerodynamisches Profil auf. Erst in einigem Abstand, beispielsweise mehrere Meter, hinter der Blattwurzel 12 weist das Rotorblatt 10 ein aerodynamisches Profil mit spitz zulaufender Hinterkante 14 auf. In dem davor liegenden Übergangsbereich weist das Rotorblatt 10 hingegen ein aerodynamisches Profil mit einer Profilendfläche, insbesondere einer abgeschnittenen Hinterkante, auf, d.h., dass das aerodynamische Profil mit einem quer zur Profilsehne angeordneten Abschlusssteg 16 endet oder abgeschlossen wird.

Fig. 2 zeigt schematisch eine Schnittdarstellung des Rotorblattes 10 in diesem Bereich entlang der in Fig. 1 dargestellten Linie A-A.

Die tragende Struktur des Rotorblattes 10 umfasst zwei Gurte 17, die zusammen mit zwei Stegen 18 eine stabile Kastenstruktur ausbilden. Die Außenhülle des Rotorblattes 10 umfasst Rotorblattschalen 19, 19', die mit der tragenden Struktur aus Gurten 17 und Stegen 18 verbunden, z.B. verklebt, sind. Alternativ können beispielsweise die Gurte 17 in die Rotorblattschalen 19, 19' integriert sein.

Typischerweise sind wenigstens zwei Rotorblattschalen, die Unterschale 19 auf der Druckseite sowie die Oberschale 19' auf der Saugseite des Rotorblattes, vorgesehen. Für die Erfindung ist es dabei unerheblich, ob die Rotorblattschalen 19, 19' sich einstückig über die gesamte Länge des Rotorblattes 10 erstrecken oder aus mehreren Rotorblattteilschalen bestehen.

Das Rotorblatt 10 wird im Bereich der Profilnase 13 angeströmt. An dem in Anströmrichtung hinteren Ende des aerodynamischen Profils befindet sich ein flächiger, quer zur Profilsehne angeordneter Abschlusssteg 16.

Bei dem gezeigten Beispiel für ein erfindungsgemäßes Rotorblatt 10 sind die Unterschale 19 und der Abschlusssteg 16 Bestandteile eines gemeinsamen Faserverbundbauteils 20 in Sandwichlaminatbauweise.

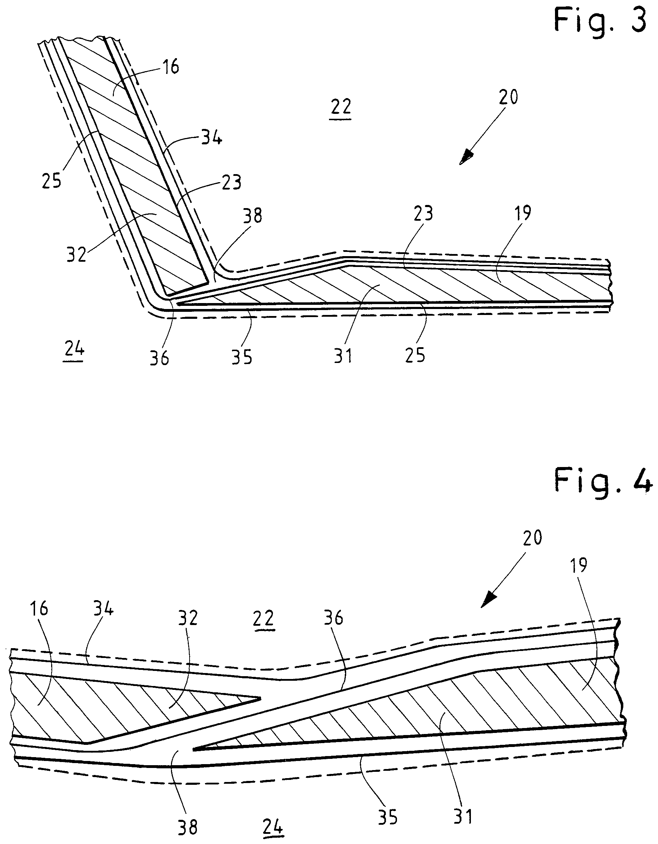

Fig. 3 zeigt den Aufbau des Sandwichlaminats des Faserverbundbauteils 20 in einer schematischen Schnittdarstellung entlang der Linie B-B in Fig. 1.

Das Faserverbundbauteil 20 umfasst einen ersten Sandwichkern 31 für die Unterschale 19 sowie einen zweiten Sandwichkern 32 für den Abschlusssteg 16. Die Sandwichkerne 31, 32 umfassen beispielsweise Latten oder Platten aus Balsaholz und sind im Wesentlichen flächig ausgebildet. Dabei ist jeweils eine Innenseite 23 der Sandwichkerne 31, 32 dem Rotorblattinneren 22 zugewandt und eine Außenseite 25 der Sandwichkerne 31, 32 dem Rotorblattäußeren 24.

Die Sandwichkerne 31 und 32 sind unter einem Winkel zueinander nebeneinander angeordnet, wobei ein Spalt zwischen den Sandwichkernen 31, 32 verbleibt. Der Sandwichkern 31 ist am Rand keilförmig ausgebildet, so dass der Spalt zwischen den in einem Winkel zueinander angeordneten Sandwichkernen 31, 32 eine im Wesentlichen konstante Spaltbreite aufweist.

Das Sandwichlaminat des Faserverbundbauteils 20 umfasst des Weiteren mehrere Laminatschichten 34, 35, 36. Hierbei handelt es sich um eine innere Laminatschicht 34, die jeweils über die Innenseite 23 der beiden Sandwichkerne 31, 32 verläuft. Des Weiteren ist eine äußere Laminatschicht 35 vorgesehen, die jeweils über die Außenseiten 25 der beiden Sandwichkerne 31, 32 verläuft. Eine dritte Laminatschicht 36 verläuft zwischen der Innenseite 23 des Sandwichkerns 31 für die Unterschale 19 und der inneren Laminatschicht 34, setzt sich fort in dem Spalt zwischen den Sandwichkernen 31, 32 und verläuft dann zwischen der Außenseite 25 des Sandwichkerns 32 für den Abschlusssteg und der äußeren Laminatschicht 35.

Die drei Laminatschichten 34, 35, 36 umfassen jeweils eine oder mehrere Lagen an Fasermaterial, beispielsweise Matten aus Glasfasern. Die Faserlagen der Laminatschichten 34, 35, 36, in Fig. 3 schematisch als durchgezogene Linien dargestellt, sowie die beiden Sandwichkerne 31, 32 sind in einer gemeinsamen Harzmatrix 38 aus ausgehärtetem Harz eingebettet, deren Oberflächenkonturen in Fig. 3 als gestrichelte Linien dargestellt sind. Die Oberflächenkonturen der Harzmatrix 38 bilden gleichzeitig die Oberflächen des Faserverbundbauteils zum Rotorblattinneren 22 und zum Rotorblattäußeren 24 hin.

Fig. 4 zeigt schematisch eine Schnittdarstellung des Faserverbundbauteils 20 in einer Schnittebene, die näher an der Blattwurzel 12 liegt und in Fig. 1 durch die Linie C-C dargestellt ist.

Der Aufbau des Sandwichlaminats des Faserverbundbauteils 20 mit zwei Sandwichkernen 31, 32 und drei Laminatschichten 34, 35, 36 entspricht grundsätzlich dem in Fig. 3 gezeigten Aufbau. Im Detail ergeben sich jedoch einige Unterschiede.

Nahe an der Blattwurzel 12 sind die Sandwichkerne 31, 32 in einem viel flacheren Winkel zueinander angeordnet, um einen gleichmäßigen Übergang in die runde Blattwurzel 12 zu erreichen. Zur Ausbildung eines Spaltes mit im Wesentlichen konstanter Spaltbreite sind in diesem Bereich beide Sandwichkerne 31, 32 am Rand keilförmig ausgebildet. Die dritte Laminatschicht 36 erstreckt sich dadurch in einem flachen Winkel von der Innenseite 23 des ersten Sandwichkerns 31 zur Außenseite 25 des zweiten Sandwichkerns 32, was sich positiv auf die Stabilität der Verbindung zwischen den beiden Sandwichkernen 31, 32 auswirkt.

Des Weiteren sind sowohl die Sandwichkerne 31, 32 als auch die Laminatschichten 34, 35, 36 zur Erhöhung der mechanischen Stabilität am Übergang zur Blattwurzel 12 dicker ausgebildet als in dem in Fig. 3 dargestellten Bereich des Faserverbundbauteils 20.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Rotorblatt
- 12: Blattwurzel
- 13: Blattnase
- 14: Hinterkante
- 16: Abschlusssteg
- 17: Gurt
- 18: Steg
- 19: Unterschale
- 19': Oberschale
- 20: Faserverbundbauteil
- 22: Rotorblattinneres
- 23: Innenseite
- 24: Rotorblattäußeres
- 25: Außenseite
- 31, 32: Sandwichkern
- 34, 35, 36: Laminatschicht
- 38: Harzmatrix

## Patentansprüche

1. Faserverbundbauteil (20) für ein Rotorblatt (10) einer Windenergieanlage umfassend einen ersten Sandwichkern (31) und einen neben dem ersten Sandwichkern (31) angeordneten zweiten Sandwichkern (32), wobei die Sandwichkerne (31, 32) jeweils eine dem Rotorblattinneren (22) zugewandte Innenseite (23) und eine dem Rotorblattäußeren (24) zugewandte Außenseite (25) aufweisen, wobei das Faserverbundbauteil (20) ferner eine erste faserhaltige Laminatschicht (36) umfasst, die beim ersten Sandwichkern (31) an der Innenseite (23) des ersten Sandwichkerns (31) und beim zweiten Sandwichkern (32) an der Außenseite (25) des zweiten Sandwichkerns (32) angeordnet ist, eine zweite faserhaltige Laminatschicht (35), die beim ersten Sandwichkern (31) an der Außenseite (25) des ersten Sandwichkerns (31) und beim zweiten Sandwichkern (32) an der Außenseite (25) des zweiten Sandwichkerns (32) angeordnet ist, sowie eine dritte faserhaltige Laminatschicht (34), die beim ersten Sandwichkern (31) an der Innenseite (23) des ersten Sandwichkerns (31) und beim zweiten Sandwichkern (32) an der Innenseite (23) des zweiten Sandwichkerns (32) angeordnet ist, wobei der erste Sandwichkern (31) und der zweite Sandwichkern (32), insbesondere bereichsweise, unter einem Winkel zueinander angeordnet sind, wobei der Winkel in einem Bereich zwischen 10° und 170° liegt.

2. Faserverbundbauteil (20) nach Anspruch 1, **dadurch gekennzeichnet, dass** die erste Laminatschicht (36), die zweite Laminatschicht (35) und/oder die dritte Laminatschicht (34) jeweils wenigstens eine Lage Fasermaterial umfassen, das in einer Matrix (38) aus ausgehärtetem Matrixmaterial eingebettet ist.

3. Faserverbundbauteil (20) nach Anspruch 2, **dadurch gekennzeichnet, dass** die erste Laminatschicht (36), die zweite Laminatschicht (35) und die dritte Laminatschicht (34) eine gemeinsame Matrix (38) aus ausgehärtetem Matrixmaterial aufweisen.

4. Faserverbundbauteil (20) nach einem der Ansprüche 1 bis 3, **dadurch gekennzeichnet, dass** das Faserverbundbauteil (20) eine Rotorblattschale (19, 19') oder eine Rotorblattteilschale (19, 19') und/oder einen Abschlusssteg (16) für eine Profilendfläche des Rotorblattes (10) ist oder umfasst.

5. Rotorblatt (10) für eine Windenergieanlage mit einem Faserverbundbauteil (20) nach einem der Ansprüche 1 bis 4.

6. Rotorblatt (10) nach Anspruch 5, **dadurch gekennzeichnet, dass** das Rotorblatt (10) einen, insbesondere nabennahen, Bereich umfasst, in dem ein aerodynamisches Profil des Rotorblattes (10) eine Profilendfläche aufweist.

7. Rotorblatt (10) nach Anspruch 6, **dadurch gekennzeichnet, dass** das Faserverbundbauteil (20) in dem Bereich des Rotorblattes (10), in dem ein aerodynamisches Profil des Rotorblattes (10) eine Profilendfläche aufweist, angeordnet ist.

## Claims

1. A composite fiber component (20) for a rotor blade (10) of a wind energy installation, comprising a first sandwich core (31) and a second sandwich core (32) arranged next to the first sandwich core (31), wherein the sandwich cores (31, 32) each have an inside (23) facing the rotor blade interior (22) and an outside (25) facing a rotor blade exterior (24), wherein the composite fiber component (20) further comprises a first fiber-containing laminate layer (36) which is arranged, in the case of the first sandwich core (31), on the inside (23) of the first sandwich core (31) and, in the case of the second sandwich core (32), on the outside (25) of the second sandwich core (32), a second fiber-containing laminate layer (35) which is arranged, in the case of the first sandwich core (31), on the outside (25) of the first sandwich core (31) and, in the case of the second sandwich core (32), on the outside (25) of the second sandwich core (32), as well as a third fiber-containing laminate layer (34) which is arranged, in the case of the first sandwich core (31), on the inside (23) of the first sandwich core (31) and, in the case of the second sandwich core (32), on the inside (23) of the second sandwich core (32), wherein the first sandwich core (31) and the second sandwich core (32), in particular regions thereof, are arranged at an angle with respect to each other, wherein the angle lies in a range between 10° and 170°.

2. The composite fiber component (20) according to claim 1, **characterized in that** the first laminate layer (36), the second laminate layer (35) and/or the third laminate layer (34) each comprise at least one ply of fiber material which is embedded in a matrix (38) of cured matrix material.

3. The composite fiber component (20) according to claim 2, **characterized in that** the first laminate layer (36), the second laminate layer (35) and the third laminate layer (34) comprise a common matrix (38) of cured matrix material.

4. The composite fiber component (20) according to any one of the claims 1 to 3, **characterized in that** the composite fiber component (20) is or comprises a rotor blade shell (19, 19'), or a rotor blade part shell (19, 19') and/or a closing-off web (16) for a profile end face of the rotor blade (10).

5. A rotor blade (10) for a wind energy installation having a composite fiber component (20) according to any one of the claims 1 to 4.

6. The rotor blade (10) according to claim 5, **characterized in that** the rotor blade (10) comprises a region, in particular a region close to the hub, in which an aerodynamic profile of the rotor blade (10) comprises a profile end face.

7. The rotor blade (10) according to claim 6, **characterized in that** the composite fiber component (20) is arranged in the region of the rotor blade (10) in which an aerodynamic profile of the rotor blade (10) comprises a profile end face.

## Revendications

1. Composant composite à base de fibres (20) pour une pale de rotor (10) d'une éolienne comprenant une première partie centrale sandwich (31) et une deuxième partie centrale sandwich (32) disposée à côté de la première partie centrale sandwich (31), dans lequel les parties centrales sandwich (31, 32) présentent respectivement un côté intérieur (23) tourné vers l'intérieur de pale de rotor (22) et un côté extérieur (25) tourné vers l'extérieur de pale de rotor (24), dans lequel le composant composite à base de fibres (20) comprend en outre une première couche de stratifié (36) contenant des fibres, qui est disposée, dans le cas de la première partie centrale sandwich (31), au niveau du côté intérieur (23) de la première partie centrale sandwich (31), et, dans le cas de la deuxième partie centrale sandwich (32), au niveau du côté extérieur (25) de la deuxième partie centrale sandwich (32), une deuxième couche de stratifié (35) contenant des fibres, qui est disposée, dans le cas de la première partie centrale sandwich (31), au niveau du côté extérieur (25) de la première partie centrale sandwich (31), et, dans le cas de la deuxième partie centrale sandwich (32), au niveau du côté extérieur (25) de la deuxième partie centrale sandwich (32), ainsi qu'une troisième couche de stratifié (34) contenant des fibres, qui est disposée, dans le cas de la première partie centrale sandwich (31), au niveau du côté intérieur (23) de la première partie centrale sandwich (31), et, dans le cas de la deuxième partie centrale sandwich (32), au niveau du côté intérieur (23) de la deuxième partie centrale sandwich (32), dans lequel la première partie centrale sandwich (31) et la deuxième partie centrale sandwich (32) sont disposées, en particulier par endroits, selon un angle l'une par rapport à l'autre, dans lequel l'angle se situe dans une plage comprise entre 10° et 170°.

2. Composant composite à base de fibres (20) selon la revendication 1, **caractérisé en ce que** la première couche de stratifié (36), la deuxième couche de stratifié (35) et/ou la troisième couche de stratifié (34) comprennent respectivement au moins une couche de matériau à base de fibres, qui est intégré dans une matrice (38) composée d'un matériau de matrice durci.

3. Composant composite à base de fibres (20) selon la revendication 2, **caractérisé en ce que** la première couche de stratifié (36), la deuxième couche de stratifié (35) et la troisième couche de stratifié (34) présentent une matrice (38) commune composée d'un matériau de matrice durci.

4. Composant composite de matrice (20) selon l'une quelconque des revendications 1 à 3, **caractérisé en ce que** le composant composite à base de fibres (20) est ou comprend une coque de pale de rotor (19, 19') ou une coque partielle de pale de rotor (19, 19') et/ou un élément de liaison de terminaison (16) pour une surface d'extrémité profilée de la pale de rotor (10).

5. Pale de rotor (10) pour une éolienne comprenant un composant composite à base de fibres (20) selon l'une quelconque des revendications 1 à 4.

6. Pale de rotor (10) selon la revendication 5, **caractérisée en ce que** la pale de rotor (10) comprend une zone, en particulier proche du moyeu, dans laquelle un profil aérodynamique de la pale de rotor (10) présente une surface d'extrémité profilée.

7. Pale de rotor (10) selon la revendication 6, **caractérisée en ce que** le composant composite à base de fibres (20) est disposé dans la zone de la pale de rotor (10), dans laquelle un profil aérodynamique de la pale de rotor (10) présente une surface d'extrémité profilée.
